# EUROPEAN PATENT APPLICATION

(11) **EP 2 080 939 A1**
(43) Date of publication of application: **22.07.2009**
(21) Application number: 07831185.9
(22) Date of filing: 30.10.2007
(51) Int. Cl.: F16J 15/32, B60T 11/16

(54) **CUP SEAL AND MASTER CYLINDER USING THE SAME**

(30) Priority: 31.10.2006 JP 2006295189
(71) Applicant: Bosch Corporation, Shibuya-ku Tokyo 150-8360 (JP)
(72) Inventor: AOKI, Tomohiro, Higashimatsuyama-Shi Saitama 3558602 (JP); SHIWA, Masaki, Higashimatsuyama-Shi Saitama 3558602 (JP)
(74) Representative: Knapp, Thomas
(86) International application number: PCT/JP2007/071452
(87) International publication number: WO 2008/054010

(57) **Abstract**

In a cup seal, the hydraulic pressure in a first hydraulic chamber (6) causes a first seal portion (21e) of an outer lip portion (21c) to closely contact to a bottom wall (20a) of a recessed portion (20) and causes a second seal portion (21f) of a base portion (21a) to closely contact to a rear surface (20b) of the recessed portion (20). A double seal due to the first and second seal portions (21e) and (21f) reliably prevents the leakage of a brake fluid from the first hydraulic chamber (6). If the pressure becomes negative in the first hydraulic chamber (6), the tip portion of the outer lip portion (21c) deflects inward and the outer peripheral end of the base portion (21a) deflects forward. Therefore, the brake fluid in the reservoir flows into the first hydraulic chamber (6) through the gaps among the second and first seal portions (21f), (21e) and the wall surface of the recessed portion (20) to maintain fluid-feeding performance.

## Description

### Background Art

This invention relates to a technical field of a cup seal used for a cylinder device including a cylinder such as a master cylinder of a brake or a clutch and a slide member arranged in the cylinder so as to undergo a relative motion in the axial direction thereof, and a master cylinder of the plunger type equipped with the cup seal in a vehicle such as automobile.

The hydraulic brake systems and the hydraulic clutch systems of automobiles are conventionally employing a master cylinder that generates a hydraulic pressure depending upon the force of depressing the brake pedal or the clutch pedal to operate the brake or the clutch. As the master cylinder, there has been known a plunger type master cylinder as disclosed in JP-A-2003-261020.

The plunger type master cylinder comprises a cylinder body having a cylinder hole, a piston inserted in the cylinder hole and slides therein to divide the hydraulic chamber, a connecting passage provided in the cylinder body to be connected to the reservoir, a relief port formed in the piston to connect the connecting passage and the hydraulic chamber together, and a seal member held in a recessed portion in the inner peripheral surface of the cylinder hole of the cylinder body and through which the piston penetrates so as to slide while attaining the sealing between the inner peripheral surface of the cylinder hole and the outer peripheral surface of the piston.

According to the plunger type master cylinder, when not in operation, the relief port of the piston is not shut off from the connecting passage by the seal member, and the hydraulic chamber is connected to the reservoir through the relief port and the connecting passage. When not in operation, therefore, the interior of the hydraulic chamber assumes the atmospheric pressure, and no hydraulic pressure generates. If the piston advances toward the hydraulic chamber as a result of depressing the clutch pedal, the relief port is shut off from the connecting passage by the seal member, and the hydraulic chamber is shut off from the reservoir. As the piston advances, therefore, a hydraulic pressure generates in the hydraulic chamber.

The seal member used for the master cylinder disclosed in JP-A-2003-261020 must satisfy a sealing performance for preventing the leakage of the hydraulic pressure that generates when the piston advances and a pumping performance which is a fluid feed performance for feeding the brake fluid in the reservoir into the hydraulic chamber to improve response when the piston retracts. In order for the seal member to exhibit the above two performances, therefore, a cup seal has been employed so as to work as the seal member.

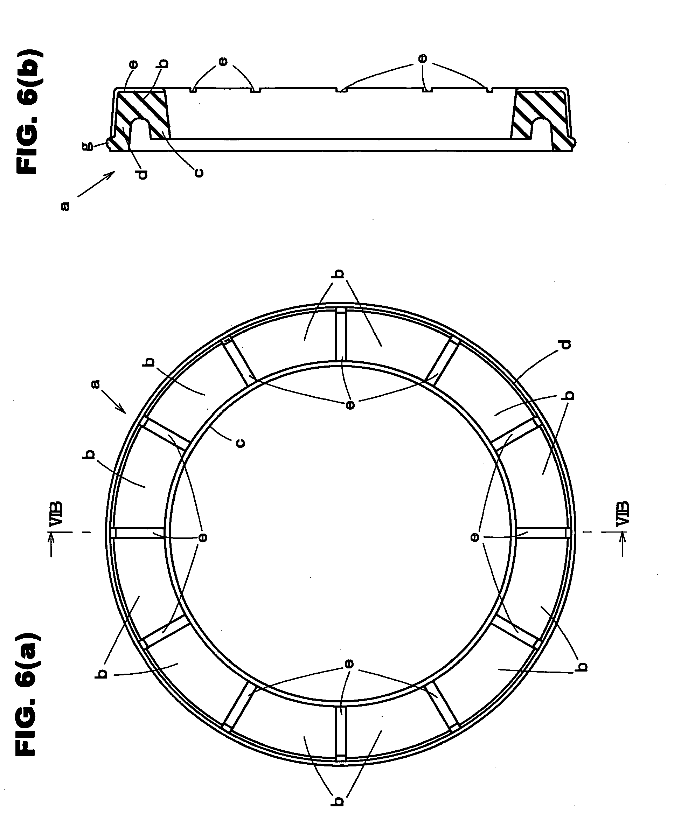

As shown in Figs. 6(a) and (b), the cup seal a is formed in a U-shape in cross section including a circular base portion b extending in the radial direction, an inner lip portion c extending in the axial direction from the inner peripheral end of the base portion b, and an outer lip portion d extending in the axial direction from the outer peripheral end of the base portion b.

When a hydraulic pressure is generated in the hydraulic chamber, the inner lip portion c closely contacts to the outer peripheral surface of the piston due to the hydraulic pressure and the outer lip portion d closely contacts to the bottom wall of the recessed portion in which the cup seal a is held due to the hydraulic pressure. Therefore, the cup seal a accomplishes a liquid-tight sealing between the outer peripheral surface of the piston and the inner peripheral surface of the cylinder hole.

Further, when the piston retracts after having generated the hydraulic pressure, the volume in the hydraulic chamber increases and the pressure in the hydraulic chamber so decreases as to turn into a negative pressure. Therefore, the inner lip portion c deflects outward and separates away from the outer peripheral surface of the piston to form a gap. Moreover, the outer lip portion d deflects inward and separates away from the bottom wall of the recessed portion to form a gap. Accordingly, the brake fluid in the reservoir is fed through the gaps into the hydraulic chamber enabling the piston to retract smoothly and quickly.

Here, according to the master cylinder disclosed in Patent document 1, the sealing performance only is imparted to the inner lip portion c of the cup seal while the sealing performance and the pumping performance are imparted to the outer lip portion d. When the pumping performance is imparted to the outer lip portion d only as described above, it becomes necessary to maintain a sufficient flow of fluid between the inner peripheral side and the outer peripheral side of the base portion b.

According to the cup seal of the master cylinder disclosed in Patent document 1, therefore, the base portion b is provided with a predetermined number of base portion-side grooves e maintaining an equal gap in the circumferential direction, the base portion-side grooves e connecting the inner peripheral side of the base portion b to the outer peripheral side thereof and opening rearward. According to this master cylinder, further, the outer peripheral surface of the outer lip portion d, too, is provided with outer lip-side grooves f in a number the same as the number of the base portion-side grooves e maintaining an equal gap in the circumferential direction so as to be connected to the base portion-side grooves e.

Further, the cup seal a has an annular seal portion g formed on the outer peripheral surface of the tip portion of the outer lip portion d. The seal portion g comes in contact with the bottom wall (inner peripheral surface) of the recessed portion to maintain liquid-tightly sealing relative to the inner peripheral surface of the cylinder and, therefore, to prevent the fluid from flowing into the reservoir from the hydraulic chamber of the master cylinder.

Here, if the seal surface pressure of the seal portion g is not maintained evenly and so as to possess a predetermined magnitude relative to the recessed portion in the inner peripheral surface of the cylinder, the hydraulic pressure may leak out through a portion having a small seal surface pressure when a hydraulic pressure is generated in the hydraulic chamber of the master cylinder. Therefore, if the thickness of the outer lip portion d of the cup seal is increased to increase the modulus of elasticity, then it is allowed to obtain an even seal surface pressure maintaining a predetermined intensity. If the thickness of the outer lip portion d is simply increased, however, there arouses a problem in that the outer lip portion d fails to exhibits the pumping performance to a sufficient degree.

### Disclosure of the Invention

An object of the present invention is to provide a cup seal which enables the base portion and the outer lip portion to possess a sufficient degree of pumping performance so as to maintain a sufficiently large feeding amount yet maintaining a favorable sealing performance.
Another object of the present invention is to provide a master cylinder which reliably generates a hydraulic pressure and is capable of further improving the response when the piston retracts.

In order to achieve the above objects, a cup seal according to the invention is a cup seal held in a recessed portion and comprises at least an annular base portion extending in the radial direction, an annular inner lip portion extending in the axial direction from an inner peripheral end of the base portion, and an annular outer lip portion extending in the axial direction from an outer peripheral end of the base portion and coming in detachable contact with the bottom wall of the recessed portion; wherein the outer lip portion is provided with a first seal portion, the first seal portion coming into close contact with the bottom wall of the recessed portion to attain the sealing relative to the bottom wall on the outer periphery of the outer lip portion for the flow of a hydraulic fluid from the outer lip portion to the base portion, and separating apart from the bottom wall of the recessed portion to form a gap relative to the bottom wall for the flow of the hydraulic fluid from the base portion to the outer lip portion; and the base portion is provided with a second seal portion, the second seal portion coming into close contact with a second side wall of the recessed portion on the side opposite to the first side wall of the recessed portion to which a tip portion of the outer lip portion faces to attain the sealing relative to the second side wall on the outer periphery of the outer lip portion for the flow of the hydraulic fluid from the outer lip portion to the base portion, and separating away from the second side wall of the recessed portion to form a gap relative to the second side wall for the flow of the hydraulic fluid from the base portion to the outer lip portion.

Further, the cup seal according to the invention is **characterized in that** the cup seal has an intermediate lip portion formed on the base portion being positioned between the inner lip portion and the outer lip portion and extending in the axial direction, the cup seal being formed by the base portion, inner lip portion, outer lip portion and intermediate lip portion in nearly an E-shape in cross section.

Further, the cup seal according to the invention has a feature in that the intermediate lip portions are arranged in a predetermined number in the circumferential direction maintaining a predetermined gap, and connecting passages are formed among the intermediate lip portions neighboring each other in the circumferential direction to connect the inner and outer peripheral sides of the intermediate lip portions together.

Further, a master cylinder according to the invention comprises a cylinder body having a cylinder hole, a piston inserted in the cylinder hole so as to slide to thereby divide a hydraulic chamber, a connecting passage provided in the cylinder body to be connected to a reservoir which stores a hydraulic fluid, a relief port formed in the piston, connected to the hydraulic chamber at all times and connecting the connecting passage to the hydraulic chamber, and a seal member held in a recessed portion in the inner peripheral surface of the cylinder hole of the cylinder body and through which the piston penetrates so as to slide while attaining the sealing between the inner peripheral surface of the cylinder hole and the outer peripheral surface of the piston, enabling the connecting passage to be connected to the relief port when not in operation and, when in operation, causing the piston to move so that the connecting passage is shut off from the relief port by the seal member; wherein the seal member is constituted by the cup seal of any one of claims 1 to 3.

According to the cup seal of the invention constituted as described above, the first seal portion of the outer lip portion comes into close contact with the bottom wall of the recessed portion to attain the sealing relative to the bottom wall on the outer periphery of the outer lip portion for the flow of the hydraulic fluid from the outer lip portion toward the base portion, and the second seal portion of the base portion comes into close contact with the second side wall of the recessed portion on the side opposite to the first side wall of the recessed portion to which the tip portion of the outer lip portion faces to attain the sealing relative to the second side wall. Therefore, a double seal portion is constituted being arranged in series for the flow of the hydraulic fluid from the outer lip portion to the base portion. Therefore, the cup seal features improved sealing performance and maintains the high hydraulic pressure of a high degree in the flow of the hydraulic fluid from the outer lip portion to the base portion on the upstream of the first seal portion of the outer lip portion.

Further, the first seal portion of the outer lip portion separates away from the bottom wall of the recessed portion to form the gap relative to the bottom wall on the outer periphery of the outer lip portion for the flow of the hydraulic fluid from the base portion to the outer lip portion, and the second seal portion of the base portion separates away from the second side wall to form the gap relative to the second side wall. Therefore, the cup seal works to smoothly flow the hydraulic fluid from the base portion to the outer lip portion on the upstream of the second seal of the base portion.

Further, a predetermined number of intermediate lip portions are circularly and intermittently arranged in the circumferential direction maintaining a predetermined gap in a manner that no intermediate lip portion is present in the portions among the neighboring intermediate lip portions, enabling the outer lip portion to easily deflect inward in the radial direction. On the outer peripheral side of the outer lip portion, therefore, the hydraulic fluid is allowed to flow more smoothly and more easily from the side of the base portion to the side of the outer lip portion.

According to the master cylinder of the present invention, on the other hand, when in operation, the inner lip portion comes into close contact with the outer peripheral surface of the piston due to the hydraulic pressure generated in the hydraulic chamber, the first seal portion of the outer lip portion comes into close contact with the bottom wall of the recessed portion, and the second seal portion of the base portion comes into close contact with the second side wall of the recessed portion making it possible to constitute the double seal portion arranged in series for the brake fluid flowing from the hydraulic chamber into the reservoir. Therefore, the cup seal features improved sealing performance and maintains the hydraulic pressure of a high degree in the hydraulic chamber.

When the piston retracts to release the operation, the pressure in the hydraulic chamber may tend to become negative. In this case, the first seal portion of the outer lip portion separates away from the bottom wall of the recessed portion to form a gap relative to the bottom wall, and the second seal portion of the base portion separates away from the second side wall of the recessed portion to form a gap relative to the second side wall enabling the hydraulic fluid to smoothly flow from the reservoir into the hydraulic chamber. This enables the outer lip portion and the base portion to exhibit the pumping performance. The hydraulic fluid in the reservoir can be sufficiently fed to the hydraulic chamber due to the pumping performance and, therefore, the piston is allowed to smoothly and quickly move in the direction in which it retracts. Even if the cup seal is provided with the second seal portion, therefore, the cup seal is capable of favorably feeding the fluid making it possible to improve the response of the piston when it retracts.

According to the master cylinder of the present invention as described above, the cup seal features favorable sealing performance yet enabling the outer lip portion and the base portion thereof to maintain the pumping performance to a sufficient degree.

### Brief Description of the Drawings

Fig. 1(a) is a vertical sectional view illustrating an embodiment of a master cylinder equipped with a cup seal according to the invention, and Fig. 1(b) is a view illustrating, on an enlarged scale, a portion of a first cup seal portion in Fig. 1(a).
Fig. 2 illustrates the cup seal used for the master cylinder shown in Fig. 1, wherein (a) is a plan view and (b) is a sectional view along the line IIB-IIB in (a).
Fig. 3 is a bottom view of Fig. 2(a).
Fig. 4 illustrates the behavior of the cup seal shown in Fig. 2, wherein (a) is a view illustrating the sealing performance of the cup seal and (b) is a view illustrating the fluid-feeding performance of the cup seal.
Fig. 5 illustrates another embodiment of the cup seal used for the master cylinder shown in Fig. 1, wherein (a) is a plan view and (b) is a sectional view along the line VB-VB in (a).
Fig. 6 illustrates a cup seal used for a conventional master cylinder, wherein (a) is a plan view and (b) is a sectional view along the line VIB-VIB in (a).

### Best Mode for Carrying Out the Invention

Described below with reference to the drawings is the best mode for carrying out the invention.

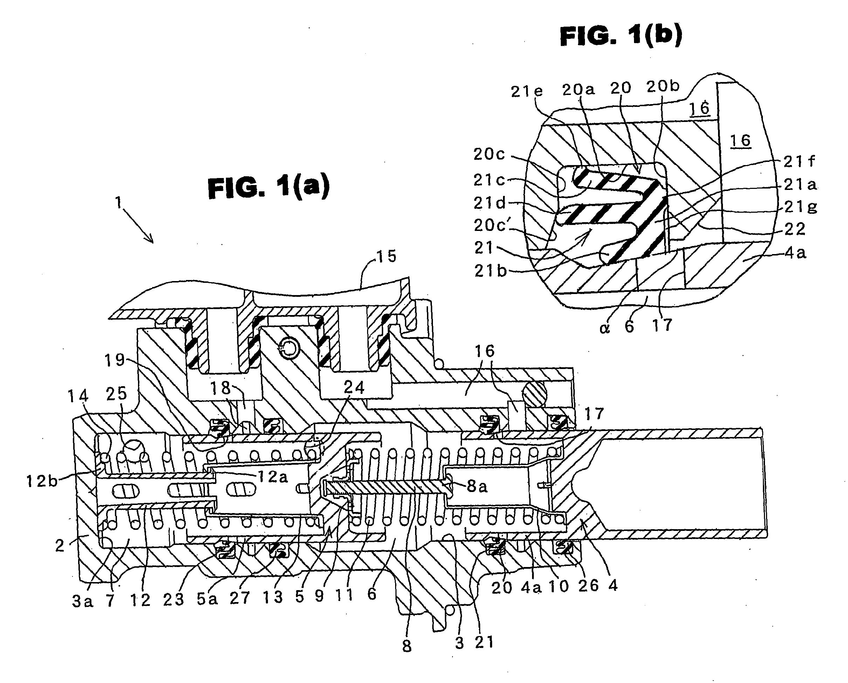

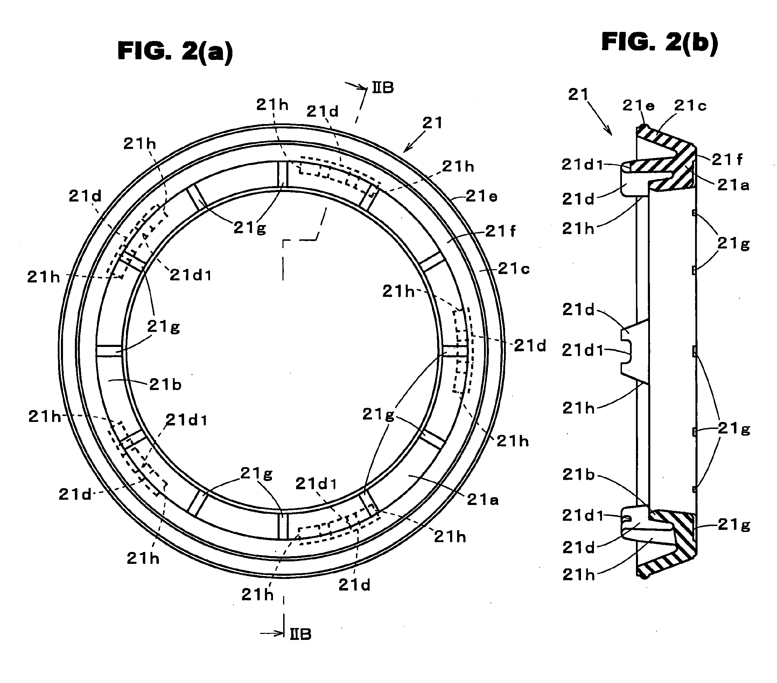

Fig. 1(a) is a vertical sectional view illustrating an embodiment of a master cylinder equipped with a cup seal according to the invention, Fig. 1(b) is a view illustrating, on an enlarged scale, a portion of a first cup seal portion in Fig. 1(a), and Figs. 2(a) and (b) are views illustrating the cup seal used for the master cylinder. In the following description, the front and back of the master cylinder are the left and right in the drawings, respectively.

Referring to Fig. 1(a), a plunger type master cylinder 1 is used as the master cylinder of a brake system and includes a cylinder body 2. A cylinder hole 3 is formed in the cylinder body 2.

A primary piston 4 and a secondary piston 5 are inserted in the cylinder hole 3 so as to slide therein. The primary piston 4 is moved leftward by a brake pedal or by a brake booster that multiplies the depressing force of the brake pedal and outputs it (not shown). Being divided by the primary piston 4 and the secondary piston 5, the cylinder hole 3 forms therein a first hydraulic chamber 6 between the primary piston 4 and the secondary piston 5, and a second hydraulic chamber 7 between the secondary piston 5 and the bottom portion 3a of the cylinder hole 3.

A first shaft member 8 is arranged in the first hydraulic chamber 6 and is provided with a pair of right and left first and second retainers 9 and 10. The first retainer 9 is fixed to the first shaft member 8 while the second retainer 10 slides relative to the first shaft member 8. Here, when the second retainer 10 comes in contact with a flange 8a formed at the right end of the first shaft member 8, the first and second retainers 9 and 10 are set in a state where they are spaced apart to a maximum degree in Fig. 1(a). A first return spring 11 is provided being compressed between the first and second retainers 9 and 10. The first retainer 9 is in contact with the secondary piston 5 at all times while the second retainer 10 is in contact with the primary piston 4 at all times. When the master cylinder 1 shown in Fig. 1(a) is not in operation, the primary piston 4 and the secondary piston 5 are set in a state where they are spaced apart to a maximum degree.

Further, a second shaft member 12 is arranged in the second hydraulic chamber 7, and a third retainer 13 is fitted to the second shaft member 12 so as to slide. Here, the third retainer 13 comes in contact with a flange 12a formed at the right end of the second shaft member 12, and the third retainer 13 is set in a state of being separated away to a maximum degree shown in Fig. 1(a). A second return spring 14 is provided being compressed between the flange 12b formed at the left end of the second shaft member 12 and the third retainer 13. The third retainer 13 is in contact with the secondary piston 5 at all times while the second shaft member 12 is in contact with the bottom portion 3a of the cylinder hole 3 at all times. When the master cylinder 1 shown in Fig. 1(a) is not in operation, the secondary piston 5 is set in a state where it is spaced apart from the bottom portion 3a to a maximum degree.

The cylinder body 2 is provided with a reservoir 15 for storing a brake fluid which is the hydraulic fluid. The reservoir 15 is connected to the first hydraulic chamber 6 through a first connecting passage 16 and a first relief port 17 formed in the primary piston 4 and is connected to the first hydraulic chamber 6 at all times. The first relief port 17 is constituted by a connecting hole in the radial direction that is perforated in a left end-side cylindrical portion 4a of the primary piston 4 to connect the first hydraulic chamber 6 on the inner peripheral side of the primary piston 4 to the first connecting passage 16 on the outer peripheral side thereof. Further, the reservoir 15 is connected to the second hydraulic chamber 7 through a second connecting passage 18 and a second relief port 19 formed in the secondary piston 5. Like the first relief port 17, the second relief port 19, too, is constituted by a connecting hole perforated in a cylindrical portion 5a of the secondary piston 5 and connects the second hydraulic chamber 7 on the inner peripheral side of the secondary piston 5 to the second connecting passage 18 on the outer peripheral side thereof.

A recessed portion 20 is formed in the inner peripheral surface of the cylinder hole 3 in which the primary piston 4 is arranged. Referring to Fig. 1(b), the annular first cup seal 21 is held in the recessed portion 20, and the primary piston 4 is liquid-tightly penetrating through the first cup seal 21 so as to slide.

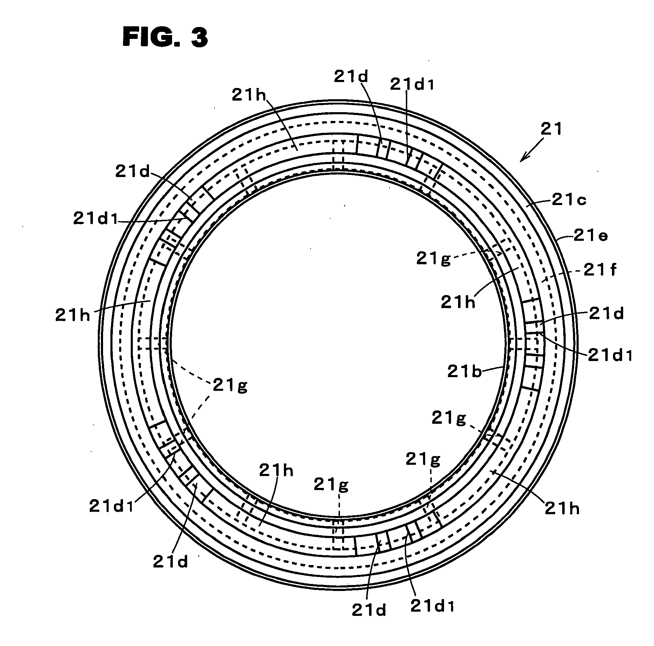

As shown in Figs. 2(a), (b) and Fig. 3, the annular first cup seal 21 includes a circular base portion 21a which extends in the radial direction and through which the primary piston 4 penetrates so as to slide, an annular inner lip portion 21b which extends in the axial direction from the end on the inner peripheral side of the base portion 21a and through which the primary piston 4 penetrates so as to slide, an annular outer lip portion 21c which extends in the axial direction from the end on the outer peripheral side of the base portion 21a and comes into detachable contact with the bottom wall 20a of the recessed portion 20, and an intermediate lip portion 21d positioned between the inner lip portion 21b and the outer lip portion 21c in the radial direction and extends in the axial direction from the end on the inner peripheral side of the base portion 21a.

In this case, the tip portion of the outer lip portion 21c is facing the first side wall 20c on the front side of the recessed portion 20. Further, the outer lip portion 21c has an increased thickness on the tip portion side thereof so as to be elastically and easily deflected to suck the brake fluid fed from the reservoir 15. Further, the outer lip portion 21c has a length in the axial direction thereof longer than the length of the inner lip portion 21b but is shorter than the length of the intermediate lip portion 21d. A first seal portion 21e of an annular protruded shape is formed on the outer peripheral surface at the tip portion of the outer lip portion 21c.

Further, a second seal portion 21f of an annular protruded shape is formed on the back surface on the outer peripheral end side of the base portion 21a. The second seal portion 21f faces a second side wall 20b on the rear side of the recessed portion 20 on the opposite side of a first side wall 20c of the recessed portion 20. Further, the back surface of the base portion 21a is provided with a predetermined number of base portion-side grooves 21g maintaining an equal gap in the circumferential direction, the base portion-side grooves 21g being positioned on the inner peripheral side of the second seal portion 21f, extending in the radial direction from the inner peripheral edge of the base portion 21a and opening rearward.

As for the intermediate lip portions 21d, a predetermined number (5 in the diagramed embodiment) of the intermediate lip portions 21d are circularly arranged in the circumferential direction maintaining a predetermined gap. Therefore, the first cup seal 21 is formed in nearly an E-shape in the axial direction in cross section at the portions of the intermediate lip portion 21d, and is formed in a U-shape in the axial direction in cross section in the portions where no intermediate lip portion 21d is present, i.e., in the portions of the connecting passages 21h. Further, connecting passages 21h are formed among the intermediate lip portions 21d, 21d that are neighboring each other in the circumferential direction in order to connect the inner and outer peripheral sides of the intermediate lip portions 21d together. The intermediate lip portions 21d have their tip portions coming in contact with the first side wall 20c of the recessed portion 20, and are prevented from further moving forward in the axial direction after having come in contact with the first side wall 20c. In this case, recessed grooves 21d₁ are formed in the tip portions of the intermediate lip portions 21d; i.e., the recessed grooves 21d₁ do not come in contact with the first side wall 20c of the recessed portion 20.

When the master cylinder 1 is not in operation in a state where the first cup seal 21 is held in the recessed portion 20 as shown in Figs. 1(a) and (b), the first seal portion 21e comes in contact with the bottom surface 20a of the recessed portion 20, and the second seal portion 21f comes in contact with the second side wall 20b of the recessed portion 20. Similarly, further, when the master cylinder 1 is not in operation, the intermediate lip portions 21d come in contact with a tapered surface 20c' formed on the first side wall 20c of the recessed portion 20.

The cylinder body 2 is provided with an axial passage 22 positioned near the back of the first cup seal 21 to connect the first relief port 17 to the first connecting passage 16. The axial passage 22 is also connected to the base portion-side grooves 21g of the first cup seal 21 at all times.

A recessed portion (not represented by a numeral) which is the same as the above recessed portion 20 is formed in the inner peripheral surface, too, of the cylinder hole 3 in which the secondary piston 5 is arranged. An annular second cup seal 23 is held in the recessed portion, and the secondary piston 5 penetrates through the second cup seal 23 liquid-tightly so as to slide. The second cup seal 23 is formed in quite the same manner as the first cup seal 21. Therefore, its details are not described here again.

Further, though not clearly shown in Fig. 1(a), an axial passage which is quite the same as the axial passage 22 is formed near the back of the second cup seal 23 to connect the second connection passage 18 to the second relief port 19. The axial passage, too, is connected to the base portion-side grooves (quite the same as the base portion-side grooves 21g of the first cup seal 21) of the second cup seal 23 at all times.

The first hydraulic chamber 6 is connected to the first output port 24 as well as to wheel cylinders of the wheels of the one brake system of the two brake systems that are not shown through the first output port 24. Further, the second hydraulic chamber 7 is connected to the second output port 25 as well as to wheel cylinders of the wheels of the other brake system of the two brake systems that are not shown through the second output port 25.

A cup seal 26 is provided in the inner periphery at the rear end of the cylinder hole 3 of the cylinder body 2, and the primary piston 4 is penetrating through the cup seal 26 so as to slide. The cup seal 26 is a conventional cup seal different from the above first and second cup seals 21 and 23, and maintains liquid-tightness between the inner peripheral surface of the cylinder hole 3 of the cylinder body 2 and the outer peripheral surface of the primary piston 4. This prevents the brake fluid in the first connecting passage 16 from leaking to the exterior from the cylinder body 2.

Similarly, a cup seal 27 is provided near the back of the second connecting passage 18 in the cylinder hole 3 of the cylinder body 2, and the secondary piston 5 is penetrating through the cup seal 27 so as to slide. The cup seal 27, too, is a conventional cup seal different from the above first and second cup seals 21 and 23, and maintains liquid-tightness between the inner peripheral surface of the cylinder hole 3 of the cylinder body 2 and the outer peripheral surface of the secondary piston 4. This maintains the hydraulic pressure in the first hydraulic chamber 6.

Next, described below is the operation of the thus constituted master cylinder 1.
In a state where the brake is not in operation shown in Fig. 1(a), the primary piston 4 and the secondary piston 5 are both set to the inoperative positions that are shown Fig. 1 (a) . The inoperative positions are the limit retracted positions of the two pistons 4 and 5. When the primary piston 4 is at its limit retracted position, the rear end of the first relief port 17 is partly positioned behind the rear end of the base portion 21a of the first cup seal 21 to form a predetermined gap α (shown in Fig. 1(b)). Due to the gap α, the first relief port 17 is connected to the first connecting passage 16 through the axial passage 22. Therefore, the first hydraulic chamber 6 is connected to the reservoir 15, and the interior of the first hydraulic chamber 6 is assuming the atmospheric pressure generating no hydraulic pressure. When the secondary piston 5 is at its limit retracted position, similarly, the second hydraulic chamber 7 is connected to the reservoir 15, and the interior of the second hydraulic chamber 7 assumes the atmospheric pressure generating no hydraulic pressure.

When the brake pedal is depressed to move the primary piston 4 forward, the first relief port 17 as a whole is closed by the base portion 21a and the inner lip portion 21b of the first cup seal 21. Therefore, the first relief port 17 and the first connecting passage 16 are shut off from each other, the first hydraulic chamber 6 is shut off from the reservoir 15, and a hydraulic pressure generates in the first hydraulic chamber 6 depending upon the force with which the pedal is depressed. Further, the secondary piston 5 moves forward due to the pedal-depressing force that is produced by the primary piston 4 moving forward and is transmitted through the first return spring 11. Similarly, therefore, the second hydraulic chamber 7 is shut off from the reservoir 15, and a hydraulic pressure generates in the second hydraulic chamber 7.

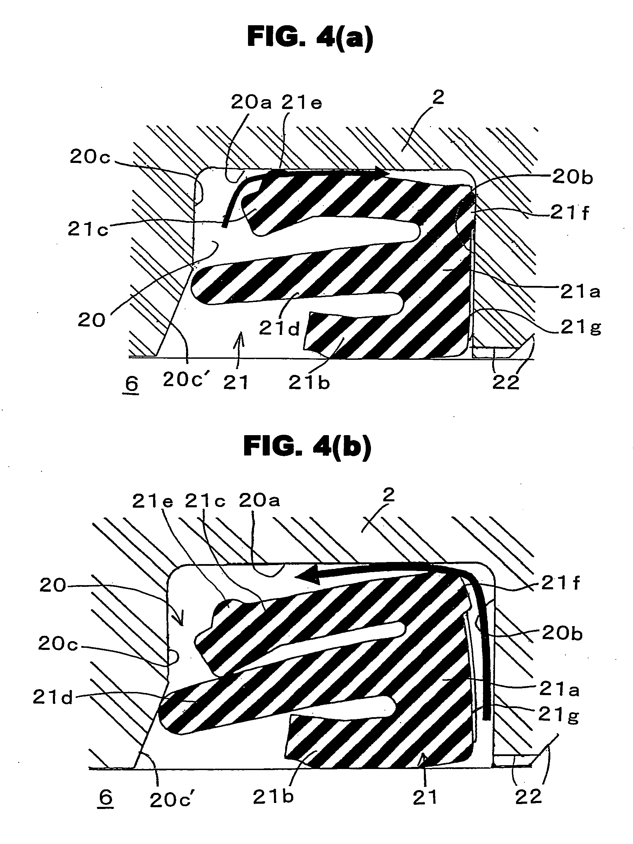

Next, as shown in Fig. 4(a), the hydraulic pressure in the first hydraulic chamber 6 pushes the first cup seal 21 rearward in the recessed portion 20, and the second seal portion 21f and the rear end surface of the base portion 21a closely contact to the second side wall 20b of the recessed portion 20. Here, the second seal portion 21f attains the sealing relative to the second side wall 20b of the recessed portion 20. Further, the inner lip portion 21b of the first cup seal 21 closely contacts to the outer peripheral surface of the primary piston 4, and the first seal portion 21e of the outer lip portion 21c of the first cup seal 21 closely contacts to the bottom wall 20a of the recessed portion 20. The first seal portion 21e attains the sealing relative to the bottom wall 20a of the recessed portion 20. That is, the first and second seal portions 21e and 21f constitute a double seal portion being arranged in series for the flow of the brake fluid from the first hydraulic chamber 6 to the reservoir 15 through the gap between the outer peripheral surface of the outer lip portion 21c and the bottom wall 20a of the recessed portion 20 and through the gap between the rear end surface of the base portion 21a and the second side wall 20b of the recessed portion 20. Here, the tip portion of the intermediate lip portion 21d separates away from the tapered surface 20c' of the recessed portion 20.

Therefore, the first hydraulic chamber 6 is sealed from the reservoir 15, the brake fluid in the first hydraulic chamber 6 does not leak into the reservoir 15, and the hydraulic pressure is maintained in the hydraulic chamber 6. Here, it is presumed that the sealing surface pressure of the first seal portion 21e is partly small, and the brake fluid in the first hydraulic chamber 6 leaks through a portion having a small sealing surface pressure in the seal portion between the first seal portion 21e and the bottom portion 20a of the recessed portion 20 as shown in Fig. 4(a). However, the brake fluid leaking through the first seal portion 21e is shut off by the seal portion between the second seal portion 21f and the second side wall 20b of the recessed portion 20, and does not leak into the base portion-side grooves 21g.

As described above, due to the double seal by the first and second seal portions 21e and 21f arranged in series in the direction in which the brake fluid flows, the brake fluid in the first hydraulic chamber 6 is reliably prevented from leaking, and the hydraulic pressure of a high degree is maintained in the first hydraulic chamber 6.
As the primary piston 4 further moves forward, the hydraulic pressure increases in the first hydraulic chamber 6. The hydraulic pressure in the first hydraulic chamber 6 is fed from the first output port 24 into the wheel cylinders of the one brake system, and the brakes of the one brake system operate.

As the secondary piston 5 moves forward, a hydraulic pressure generates in the second hydraulic chamber 7. Similarly, the brake fluid in the second hydraulic chamber 7 is reliably prevented from leaking due to the double sealing by the first and second seal portions of the second cup seal 23, and the hydraulic pressure of a high degree is maintained in the second hydraulic chamber 7.
As the secondary piston 5 further moves forward, the hydraulic pressure increases in the second hydraulic chamber 7. The hydraulic pressure in the second hydraulic chamber 7 is fed from the second output port 25 into the wheel cylinders of the other brake system, and the brakes of the other brake system operate.

If the brake pedal is no longer depressed in the state where the brake is in operation, the primary piston 4 retracts due to the resilient force of the first return spring 11 and tends to return to the inoperative position. Therefore, the hydraulic pressure in the first hydraulic chamber 6 drops and tends to assume a negative pressure instantaneously. Since the rear end side of the outer lip portion 21c is connected to the reservoir 15 and assumes the atmospheric pressure, the first cup seal 21 moves forward in the recessed portion 20 to form gaps among the rear end surface of the first cup seal 21, second seal portion 21f and the second side wall 20b of the recessed portion 20. Here, the intermediate lip 21d comes in contact with the tapered surface 20c'. Further, since the hydraulic pressure in the first hydraulic chamber 6 tends to assume a negative pressure instantaneously, the tip portion side of the outer lip portion 21c deflects inward to form a gap between the bottom wall 20a of the recessed portion 20 and the first seal portion 21e of the lip portion 21c. Moreover, the outer peripheral end side of the base portion 21a deflects forward, and the gap increases between the rear end surface of the base portion 21a and the second side wall 20b of the recessed portion 20.

Therefore, the brake fluid in the reservoir 15 flows to the front side of the first cup seal 21 through the first connecting passage 16, axial passage 22, base portion-side grooves 21g, gap between the rear end surface of the base portion 21a and the second side wall 20b of the recessed portion 20, and gap between the bottom wall 20a and the outer lip portion 21c. The brake fluid, further, flows into the first hydraulic chamber 6 causing the intermediate lip portions 21d to be deflected inward. Thus, the first and second seal portions 21e and 21f constitute the seal portion separating away from the bottom wall 20 of the recessed portion 20 and from the second side wall 20b, and forming gaps relative to the bottom wall 20a and the second side wall 20b for the flow of the hydraulic fluid from the reservoir 15 to the first hydraulic chamber 6. Accordingly, the brake fluid is reliably fed from the reservoir 15 to the first hydraulic chamber 6, the hydraulic pressure decreases in the first hydraulic chamber 6, and the primary piston 4 smoothly and quickly retracts due to the urging force of the first return spring 11.

Accompanying the retraction of the primary piston 4 and the decrease of hydraulic pressure in the first hydraulic chamber 6, the secondary piston 5 commences to retract being urged by the second return spring 14. At this moment, the brake fluid is fed from the reservoir 15 into the second hydraulic chamber 7 like into the above first hydraulic chamber 6. Therefore, the secondary piston 5, too, smoothly and quickly retracts and the hydraulic pressure decreases in the second hydraulic chamber 7.

As the primary piston 4 retracts and as the rear end of the first relief port 17 is partly positioned at the back of the rear end of the base portion 21a of the first cup seal 21 as shown in Figs. 1(a) and (b), the first relief port 17 is connected to the first connecting passage 16 through the axial passage 22 and the base portion-side grooves 21g. Therefore, the brake fluid in the first hydraulic chamber 6 is drained into the reservoir 15 through the first relief port 17 and the first connecting passage 16, and the hydraulic pressure further decreases in the first hydraulic chamber 6.

Similarly, as the secondary piston 5 retracts, the second relief port 19 is connected to the second connecting passage 18, the brake fluid in the second hydraulic chamber 7 is drained into the reservoir 15 through the second relief port 19 and the second connecting passage 18, and the hydraulic pressure further decreases in the second hydraulic chamber 7.

After brought to their limit retracted positions shown in Fig. 1(a), the two pistons 4 and 5 come into a halt, the first and second hydraulic chambers 6 and 7 assume the atmospheric pressure, the master cylinder 1 becomes inoperative, and the brake is released.

According to the first and second cup seals 21, 23 of this embodiment as described above, on the outer periphery of the outer lip portion 21c, the first seal portion 21e of the outer lip portion 21c closely contacts to the bottom wall 20a of the recessed portion 20 to attain the sealing relative to the bottom wall 20a, and the second seal portion 21f of the base portion 21a closely contacts to the opposing second side wall 20b of the recessed portion 20 to attain the sealing relative to the second side wall 20b for the flow of the brake fluid (hydraulic fluid) from the outer lip portion 21c to the base portion 21a, constituting a double seal portion arranged in series for the flow of the brake fluid from the outer lip portion 21c to the base portion 21a. Therefore, the first and second cup seals 21 and 23 exhibit improved sealing performance, and work to maintain the hydraulic pressure of a high degree (i.e., hydraulic pressures in the first and second hydraulic chambers 6 and 7) for the flow of the brake fluid from the outer lip portion 21c to the base portion 21a on the upstream of the first seal portions 21e of the outer lip portions 21c of the first and second cup seals 21 and 23.

On the outer periphery of the outer lip portion 21c, further, the first seal portion 21e of the outer lip portion 21c separates away from the bottom wall 20a of the recessed portion 20 to form a gap relative to the bottom wall 20a, and the second seal portion 21f of the base portion 21a separates away from the second side wall 20b of the recessed portion 20 to form a gap relative to the second side wall 20b for the flow of the brake fluid from the base portion 21a to the outer lip portion 21c. Therefore, the second seal portions 21f of the base portions 21a of the first and second cup seals 21 and 23 work to smoothly flow the brake fluid to the upstream side in the flow of the brake fluid from the base portion to the outer lip portion (i.e., to smoothly flow the brake fluid from the reservoir 15 to the first and second hydraulic chambers 6 and 7).

Further, a predetermined number of intermediate lip portions 21d are circularly and intermittently arranged in the circumferential direction maintaining a predetermined gap. Here, however, no intermediate lip portion 21d is made present in the portions among the intermediate lip portions 21d neighboring to each other (i.e., in the portions of connecting passages 21h), permitting the outer lip portion 21c to be easily deflected inward in the radial direction. On the outer peripheral side of the outer lip portion 21c, therefore, the brake fluid is allowed to more smoothly and more easily flow from the side of the base portion 21a to the side of the outer lip portion 21c. The easy inward deflection of the outer lip portion 21c in the radial direction can be obtained even with the conventional cup seal having an E-shape in transverse cross section which is not provided with the second seal portion 21f.

When the master cylinder 1 of this embodiment is in operation, the hydraulic pressure generated in the first hydraulic chamber 6 causes the inner lip portion 21b of the first cup seal 21 to be closely contacted to the outer peripheral surface of the primary piston 4, causes the first seal portion 21e of the outer lip portion 21c to be closely contacted to the bottom wall 20a of the recessed portion 20 and, further, causes the second seal portion 21f of the base portion 21a to be closely contacted to the second side wall 20b of the recessed portion 20. Therefore, the double seal constituted by the first and second seal portions 21e and 21f arranged in series in the direction in which the brake fluid flows, works to prevent the leakage of the brake fluid from the first hydraulic chamber 6 and to maintain the hydraulic pressure of a high degree in the first hydraulic chamber 6. Similarly, further, the double seal constituted by the first and second seal portions of the second cup seal member 23 works to prevent the leakage of the brake fluid from the second hydraulic chamber 7 and to maintain the hydraulic pressure of a high degree in the second hydraulic chamber 7. Thus, improved sealing performance is attained by the first and second cup seals 21 and 23.

When the primary piston 4 starts retracting to release the operation, the brake fluid in the reservoir 15 is fed to the first hydraulic chamber 6 by the pumping performance of the base portion 21a and the outer lip portion 21c of the first cup seal 21; i.e., the primary piston 4 retracts smoothly and quickly. Similarly, when the secondary piston 5 retracts, the brake fluid in the reservoir 15 is fed to the second hydraulic chamber 7 by the pumping performance of the base portion and the outer lip portion of the second cup seal 23; i.e., the secondary piston 5 retracts smoothly and quickly. Thus, the first and second cup seals 21 and 23 feature improved brake fluid-feeding performance, making it possible to improve the response of the two pistons 4 and 5 when they retract.

According to the master cylinder 1 of this embodiment as described above, the outer lip portions and the base portions of the first and second cup seals 21 and 23 feature favorable sealing performance yet providing pumping performance to a sufficient degree.

In the above embodiment, a predetermined number of intermediate lip portions 21d are arranged in the circumferential direction maintaining a predetermined gap. The invention, however, is in no way limited thereto only, and the intermediate lip portion 21d may be formed as a continuous annular lip.

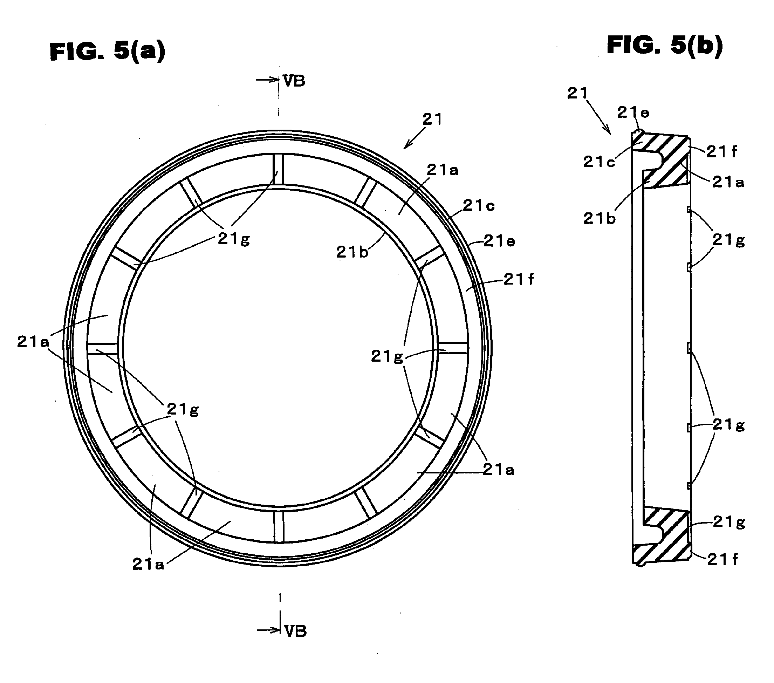

Figs. 5(a) and (b) are views similar to Figs. 2(a) and (b), and illustrate another embodiment of the cup seal used for the above-mentioned master cylinder. Here, the same constituent elements are denoted by the same reference numerals but their detailed description is not repeated.

The cup seal 21 of the embodiment shown in Figs. 2(a) and (b) above was formed in an E-shape in cross section having intermediate lip portions 21d. As shown in Figs. 5(a) and (b), however, the cup seal 21 of this embodiment is formed in a U-shape in cross section having the inner lip portion 21b and the outer lip portion 21c but without having the intermediate lip portion 21d.
Other constitutions, actions and effects of the master cylinder 1 and the first and second cup seals 21, 23 of this embodiment are the same as those described above.

Not being limited to the master cylinder of the brake device of the above embodiment only, the cup seal of the present invention can be used for any cylinder device which comprises a cylinder and a slide member arranged in the cylinder so as to move relative thereto in the axial direction, and in which the cup seal blocks the flow of the hydraulic fluid from the one side in the axial direction to the other side in the axial direction and in which the cup seal permits the flow of the hydraulic fluid from the other side in the axial direction to the one side in the axial direction.

Further, not being limited to the master cylinder of the brake device of the above embodiment only, the master cylinder of the present invention can be used as a master cylinder of the clutch device as well as for any hydraulic device which generates the hydraulic pressure in the hydraulic chamber as the piston moves forward. The above embodiment describes a tandem master cylinder in which two pistons are arranged in series. However, the master cylinder of the invention can be applied to a single master cylinder as well as to any master cylinder provided it is a master cylinder of the plunger type.

### Industrial Applicability

The cup seal of the invention can be favorably used for a cylinder device that comprises a cylinder and a slide member arranged in the cylinder so as to undergo a relative motion in the axial direction thereof.
Further, the master cylinder according to the present invention can be favorably utilized for a plunger type master cylinder which is provided with a cup seal, generates a hydraulic pressure in the hydraulic chamber when the piston moves forward, and feeds the operation brake fluid into the hydraulic chamber when the piston retracts. In particular, the invention can be preferably utilized for the master cylinders of the brake and clutch in a vehicle such as an automobile.

## Claims

1. A cup seal held in a recessed portion and comprising at least an annular base portion extending in the radial direction, an annular inner lip portion extending in the axial direction from an inner peripheral end of the base portion, and an annular outer lip portion extending in the axial direction from an outer peripheral end of the base portion and comes in detachable contact with the bottom wall of the recessed portion;
wherein the outer lip portion is provided with a first seal portion, the first seal portion coming into close contact with the bottom wall of the recessed portion to attain the sealing relative to the bottom wall on the outer periphery of the outer lip portion for the flow of the hydraulic fluid from the outer lip portion to the base portion, and separating apart from the bottom wall of the recessed portion to form a gap relative to the bottom wall for the flow of the hydraulic fluid from the base portion to the outer lip portion; and
the base portion is provided with a second seal portion, the second seal portion coming into close contact with a second side wall of the recessed portion on the side opposite to the first side wall of the recessed portion to which a tip portion of the outer lip portion faces to attain the sealing relative to the second side wall on the outer periphery of the outer lip portion for the flow of the hydraulic fluid from the outer lip portion to the base portion, and separating away from the second side wall of the recessed portion to form a gap relative to the second side wall for the flow of the hydraulic fluid from the base portion to the outer lip portion.

2. The cup seal according to claim 1, wherein the cup seal has an intermediate lip portion formed on the base portion being positioned between the inner lip portion and the outer lip portion and extending in the axial direction, the cup seal being formed by the base portion, inner lip portion, outer lip portion and intermediate lip portion in nearly an E-shape in cross section.

3. The cup seal according to claim 2, wherein the intermediate lip portions are arranged in a predetermined number in the circumferential direction maintaining a predetermined gap, and connecting passages are formed among the intermediate lip portions neighboring each other in the circumferential direction to connect the inner and outer peripheral sides of the intermediate lip portions together.

4. A master cylinder comprising a cylinder body having a cylinder hole, a piston inserted in the cylinder hole so as to slide to thereby divide a hydraulic chamber, a connecting passage provided in the cylinder body and is connected to a reservoir which stores a hydraulic fluid, a relief port formed in the piston, connected to the hydraulic chamber at all times and connects the connecting passage to the hydraulic chamber, and a seal member held in a recessed portion in the inner peripheral surface of the cylinder hole of the cylinder body and through which the piston penetrates so as to slide while attaining the sealing between the inner peripheral surface of the cylinder hole and the outer peripheral surface of the piston, enabling the connecting passage to be connected to the relief port when not in operation and, when in operation, causing the piston to move so that the connecting passage is shut off from the relief port by the seal member;
wherein the seal member is constituted by the cup seal of any one of claims 1 to 3.
